# EUROPÄISCHE PATENTSCHRIFT

(11) **EP 3 216 723 B1**
(45) Veröffentlichungstag und Bekanntmachung des Hinweises auf die Patenterteilung: **18.04.2018**
(21) Anmeldenummer: 17151658.6
(22) Anmeldetag: 16.01.2017
(51) Int. Cl.: B65D 90/52

(54) **SCHWAPPSCHUTZVORRICHTUNG**
SLOP PREVENTION DEVICE
CHICANE ANTIBALLOTEMENT

(30) Priorität: 07.03.2016 DE 202016101226 U
(43) Veröffentlichungstag der Anmeldung: 13.09.2017
(73) Patentinhaber: Rhodius GmbH, 91781 Weissenburg (DE)
(72) Erfinder: APPEL, Erwin, 91785 Pleinfeld (DE); SCHÜLEIN, Wolfgang, 91757 Treuchtlingen (DE)
(74) Vertreter: Manitz Finsterwald Patentanwälte PartmbB

(56) Entgegenhaltungen:
- EP-A1- 2 243 652
- CN-A- 102 514 828
- DE-A1- 19 650 415
- DE-A1- 19 729 818

## Beschreibung

Die vorliegende Erfindung betrifft Schwappschutzvorrichtung zur Dämpfung von Schwappbewegungen gemäß dem Oberbegriff von Anspruch 1, sowie einen Tank gemäß dem Oberbegriff von Anspruch 12.
Das Ziel einer Schwappschutzvorrichtung ist es, Schwappbewegungen im Inneren eines Tanks zu dämpfen. Diese Schwappbewegungen treten insbesondere bei in Fahrzeugen angeordneten Tanks für flüssige Medien wie Kraftstofftanks, Wassertanks, o. dgl. auf. Bei nicht vollständig gefülltem Tank läuft das flüssige Medium bei einer Richtungsänderung des Fahrzeugs aufgrund der Trägheit des Mediums gegen die Innenwand auf und schwappt im Tank hin und her. Dies führt je nach Form, Anordnung und Material des Tanks zu einer ungewollten Geräuschentwicklung - dem sogenannten Hammerschlag-Effekt. Ferner können diese Schwappbewegungen des flüssigen Mediums insbesondere bei kleinen Fahrzeugen zu einer Beeinträchtigung von deren Fahreigenschaften, führen, bspw. der Bewegungsrichtung des Fahrzeugs.
Aus dem Stand der Technik sind verschiedene Schwappschutzvorrichtungen und Tanks mit Schwappschutzvorrichtungen zu diesem Zweck bekannt. Bspw. ist es aus der Beschreibung zum Stand der Technik in der gattungsgemäßen DE 197 29 818 A1 bekannt, mehrere Schichten eines Gestricks im Tankinneren im Bereich von Tankoberseite und Tankwandung an dafür im Tank angebrachten Befestigungsbolzen zu befestigen. Das Befestigen des Gestricks im Tankinneren gestaltet sich dabei sehr aufwendig.

Zur Vereinfachung schlägt die DE 197 29 818 A1 vor, Schwappschutzelemente in der Form von Füllkörpern aus Gestrick, Gewirk oder Gewebe so lange in einen Tank zu füllen, bis dieser vollständig mit den Füllkörpern ausgefüllt ist.

Die EP 2 243 652 A1 schlägt demgegenüber eine Schwappschutzvorrichtung zum Dämpfen von Schwappbewegungen vor, bei der Schwappschutzelemente in der Form von Füllkörpern in einer Hülle aus einer Gestrick-, Gewirk-, bzw. Gewebestruktur aufgenommen sind. Die Füllkörper können selbst aus Gestrick sein, bspw. aus einem Gestrickschlauch bestehen, welcher zusammengelegt und durch Herausziehen einer mittleren Maschenreihe eine Art Rose bildet. Die Hülle kann im Tank befestigt werden.

Bei dieser Schwappschutzvorrichtung ist die Ausrichtung und Position der als Schwappschutzelemente ausgebildeten Füllkörper innerhalb der Hülle und/oder des Tanks nicht bestimmt, so dass sich hiervon abhängig die Dämpfungswirkung der Schwappschutzelemente über die Zeit und in Abhängigkeit von den vorhergegangenen Schwappbewegungen variiert, was eine genaue Auslegung der Schwappschutzvorrichtung erschwert und in der Regel eine Überdimensionierung erfordert.

Aufgabe der vorliegenden Erfindung ist es daher, eine Schwappschutzvorrichtung bereitzustellen, deren Dämpfungswirkung besser bestimmt werden kann und eine bessere Auslegung gemäß den Anforderungen erlaubt.

Zur Lösung dieser Aufgabe wird eine Schwappschutzvorrichtung gemäß dem Oberbegriff von Anspruch 1 mit den Merkmalen des kennzeichnenden Teils von Anspruch 1 vorgeschlagen.

Dadurch, dass zusätzlich zu der durch die Struktur des textilen Flächengebildes bestimmte Mikrostruktur zur Dämpfung der Schwappbewegungen das Schwappschutzelement eine durch eine, vorzugsweise vordefinierte, Anordnung, insbesondere Formgebung, des textilen Flächengebildes erzeugte Makrostruktur zur Dämpfung der Schwappbewegungen aufweist, wird eine genaue Bestimmung und Auslegung des Schwappschutzelements an die Anforderungen ermöglicht. Auch hierdurch kann das Schwappschutzelement genau dimensioniert und überschüssiges Material eingespart werden.

Die Makrostruktur stellt eine zusätzliche Dämpfungswirkung bereit, so dass die Dämpfungswirkung der Schwappschutzvorrichtung gesteigert werden kann, insbesondere im Verhältnis zum Gewicht und/oder zum Volumen des Schwappschutzelements bzw. der verwendeten Schwappschutzelemente.

In weiterer Ausgestaltung der Erfindung ist gemäß Anspruch 2 vorgesehen, dass das Schwappschutzelement eine räumlich geordnete Formstruktur aufweist, welche durch die Makrostruktur gebildet wird.

In den Ansprüchen 3 bis 9 sind bevorzugte Ausgestaltungen des mindestens einen Schwappschutzelements beschrieben. Auch diese Weiterbildungen der Erfindung erlauben eine verbesserte Auslegung bzw. Dämpfungswirkung des Schwappschutzelements.

Vorteilhafte Ausgestaltungen des Befestigungselements zur Befestigung der Schwappschutzvorrichtung in einem Tank sind in den Ansprüchen 10 und 11 erläutert.

Darüber hinaus wir die eingangs genannte Aufgabe bei einem Tank gemäß dem Oberbegriff von Anspruch 12 durch die Merkmale des kennzeichnenden Teils von Anspruch 12 gelöst.

Es ergeben sich dieselben Vorteile wie zuvor in Zusammenhang mit der Schwappschutzvorrichtung erläutert.

Eine bevorzugte Weiterbildung des Tanks ist in Anspruch 13 erläutert. Dadurch, dass der Tank ein zu dem Befestigungselement der Schwappschutzvorrichtung korrespondierendes Tankbefestigungselement zur Befestigung der Schwappschutzvorrichtung in dem Tank aufweist, kann die Schwappschutzvorrichtung auf besonders einfache Art und Weise, insbesondere als Ganzes, im Tank befestigt werden.

Im Folgenden wird die Erfindung anhand einer lediglich ein Ausführungsbeispiel darstellenden Zeichnung näher erläutert. In der Zeichnung zeigt
- Fig. 1: eine dreidimensionale Ansicht ein erstes Ausführungsbeispiel einer vorschlagsgemäße Schwappschutzvorrichtung,
- Fig. 2: a) eine schematische Schnittansicht der Schwappschutzvorrichtung gemäß Ansicht IIa) aus Fig. 1 und b) eine schematische Aufsicht von unten gemäß Ansicht IIb) aus Fig. 1,
- Fig. 3: a) eine schematische Schnittansicht einer Schwappschutzvorrichtung eines zweiten Ausführungsbeispiels und b) eine schematische Schnittansicht einer Schwappschutzvorrichtung eines dritten Ausführungsbeispiels,
- Fig. 4: ein auseinandergefaltetes Schwappschutzelement einer vorschlagsgemäßen Schwappschutzvorrichtung und
- Fig. 5: eine Darstellung des Brechens einer Schwappbewegung durch die Schwappschutzvorrichtung in einem Tank.

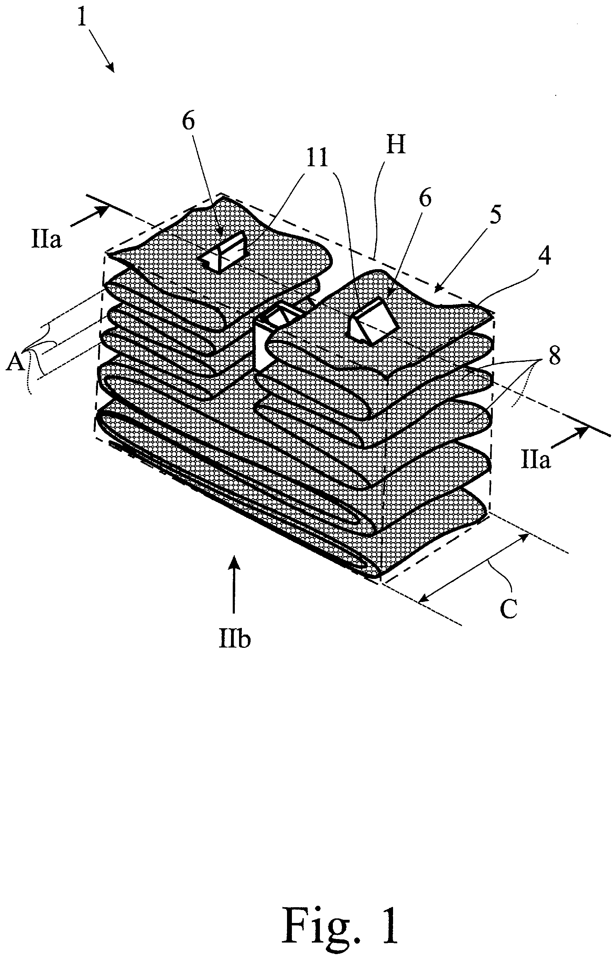

In der Fig. 1 ist eine vorschlagsgemäße Schwappschutzvorrichtung 1 zur Dämpfung von Schwappbewegungen eines flüssigen Mediums 2 in einem Tank 3 gezeigt. Die Schwappschutzvorrichtung 1 weist ein textiles, vorzugsweise elastisches Flächengebilde 4 auf, welches ein zumindest teilweise fluiddurchlässiges Schwappschutzelement 5 zur Dämpfung von Schwappbewegungen bildet. Die Schwappschutzvorrichtung 1 kann weitere, insbesondere zumindest teilweise fluiddurchlässige, Schwappschutzelemente 5 aufweisen, welche vorzugsweise ebenfalls aus einem textilen, insbesondere zumindest teilweise elastischen Flächengebilde 4 gebildet werden. Auch wenn die Eigenschaften und Ausgestaltung des Schwappschutzelements 5 für ein Schwappschutzelement 5 beschrieben sind, gelten diese vorzugsweise, sofern nicht anders beschrieben, auch für die weiteren.

Die Schwappschutzvorrichtung 1, insbesondere das Schwappschutzelement 5 bzw. das textile Flächengebilde 4, ist hier und vorzugsweise fluiddurchlässig und/oder saugunfähig ausgebildet.

Die Schwappschutzvorrichtung 1 weist ferner ein Befestigungselement 6 zur Befestigung des Schwappschutzelements 5 in dem Tank 3 auf. Das Befestigungselement 6 dient vorzugsweise einer ortsfesten Anordnung der Schwappschutzvorrichtung 1 im Tank 3. Gemäß einer weniger bevorzugten alternativen Ausgestaltung kann das Befestigungselement 6 auch ein flexibles Zugmittel, bspw. ein Seil, zur Befestigung aufweisen, welches eine nicht ortsfeste Befestigung ermöglicht und insbesondere eine Bewegung des Schwappschutzelements 5 innerhalb des Tanks 3 erlaubt.

Bei dem Tank 3 kann es sich bspw. um einen Kraftstofftank oder einen Wassertank handeln, insbesondere um den Tank 3 eines Fahrzeugs.

Das vorschlagsgemäße Schwappschutzelement 5 weist eine durch die Struktur des textilen Flächengebildes 4 bestimmte Mikrostruktur zur Dämpfung der Schwappbewegungen auf. Hier und vorzugsweise wird die Mikrostruktur durch die Maschen des textilen Flächengebildes 4 gebildet.

Zusätzlich weist das vorschlagsgemäße Schwappschutzelement 5 eine durch eine Anordnung, insbesondere Formgebung, des textilen Flächengebildes 4 erzeugte Makrostruktur zur Dämpfung der Schwappbewegungen auf. Sowohl die Mikrostruktur als auch die Makrostruktur bewirken eine Dämpfungswirkung gegen Schwappbewegungen. Vorzugsweise kann durch eine Verformung der Makrostruktur infolge des Einwirkens einer Schwappbewegung auf das Schwappschutzelement 5 die Mikrostruktur sich, insbesondere temporär, verändern. Vorzugsweise ändert sich die Maschengeometrie des Flächengebildes 4.

Durch das Vorsehen sowohl einer Mikrostruktur, als auch einer durch die Anordnung des Flächengebildes erzeugten Makrostruktur lässt sich nicht nur die Dämpfungswirkung steigern, sondern die Dämpfungswirkung lässt sich auch besonders gut auf die Anforderungen an die Schwappschutzvorrichtung 1 einstellen.

Hier und vorzugsweise weist das Schwappschutzelement 5 eine räumlich geordnete Formstruktur auf, welche durch die Makrostruktur gebildet wird. Dies ermöglicht es, die Schwappschutzvorrichtung 1, insbesondere auch das Schwappschutzelement 5, in vordefinierter Form und Ausrichtung im Tank 3 zu befestigen. Hierdurch wird es ermöglicht, die Schwappschutzvorrichtung 5 besser auf die Anforderungen zur Dämpfung der Schwappbewegungen auszulegen. Im Ausführungsbeispiel hat das Schwappschutzelement 5 im Wesentlichen eine quaderförmige Form.

Das Schwappschutzelement 5 ist hier und vorzugsweise elastisch ausgebildet. Vorzugsweise ist das Schwappschutzelement 5 derart elastisch ausgebildet, dass es nach der Wegnahme äußerer deformierender Kräfte im Wesentlichen wieder seine ursprüngliche Form annimmt, also insbesondere seine räumlich geordnete Formstruktur. Dieses Rückverformen erfolgt hier und vorzugsweise aus sich heraus, also ohne das Einwirken äußerer Rückstellkräfte auf das Schwappschutzelement 5. Ein elastisches Schwappschutzelement 5 erlaubt es auch, die Schwappschutzvorrichtung 1 beim Einführen in den Tank 3 zur Befestigung darin zu stauchen und daher durch kleinere Tanköffnungen in den Tank 3 einzuführen.

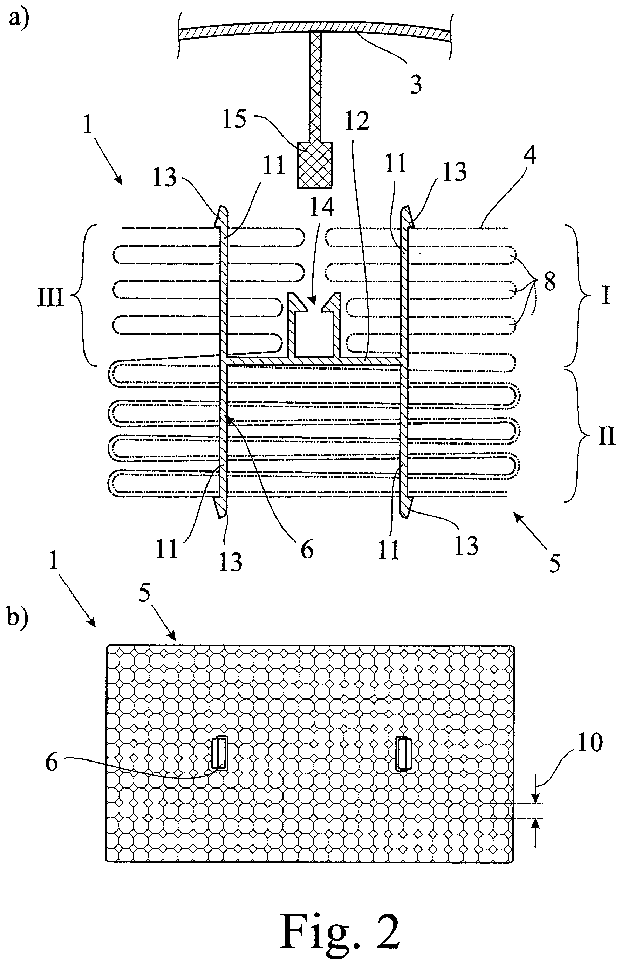

Wie in der Schnittdarstellung gemäß Fig. 2a) gut zu erkennen ist, hält das Befestigungselement 6 das Schwappschutzelement 5 in der Makrostruktur bzw. in der geordneten Formstruktur.

Unter "Halten" ist hier und vorzugsweise zu verstehen, dass das Befestigungselement 6 zwar ein dämpfendes Einfedern 7 des Schwappschutzelements 5 erlaubt, dass es nach einem solchen Einfedern 7 jedoch vorzugsweise im Wesentlichen wieder seine ursprüngliche Form annimmt.

Vorzugsweise wird die Formstruktur bzw. die Makrostruktur durch eine Faltung 8 des textilen Flächengebildes 4 gebildet. Die Faltung 8 ist entlang einer Faltachse A gebildet. Die Faltung 8 ist vorzugsweise quer zur langen Kante B des auseinandergefalteten Flächengebildes 4 und/oder parallel zur kurzen Kante C der hergestellten, im Wesentlichen quaderförmigen Schwappschutzvorrichtung 1 ausgerichtet. Durch die Faltung 8 bzw. Faltungen 8 weist die Schwappschutzvorrichtung 1 mehrere Lagen auf.

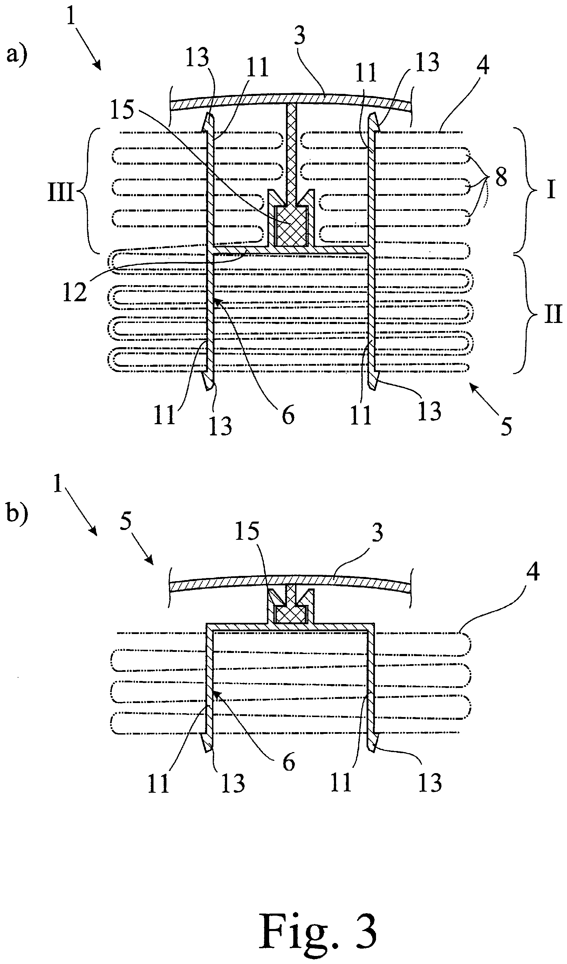

Vorzugsweise ist das textile Flächengebilde 4 ziehharmonikaartig gefaltet. Die ziehharmonikaartige Faltung 8 kann wie im Ausführungsbeispiel der Fig. 2a und 3a sich in der Faltung 8 unterscheidende Abschnitte I, II, III aufweisen, vorzugsweise zwei oder drei sich in der Faltung unterscheidende Abschnitte. Vorzugsweise unterscheiden sich zumindest zwei der Abschnitte in der Kantenlänge zwischen zwei Faltungen 8. Weiter vorzugsweise sind jedoch zwei der sich unterscheidenden Abschnitte I, III im Wesentlichen gleich bzw. achsensymmetrisch und/oder ebenensymmetrisch ausgebildet.

Hier und vorzugsweise wird die Dämpfungswirkung der Makrostruktur bzw. die Dämpfungswirkung der Formstruktur durch das Flächengebilde 4 selbst bereitgestellt, insbesondere durch ein elastisches Einfedern 7 des Schwappschutzelements 5.

Gemäß einer bevorzugten Ausgestaltung stellt die Makrostruktur bzw. die geordnete Formstruktur die Dämpfungswirkung in einer Vorzugsrichtung 9 bereit, insbesondere durch elastisches Einfedern 7. Die Vorzugsrichtung 9 ist vorzugsweise orthogonal zu den Faltachsen A des textilen Flächengebildes 4 ausgerichtet.

Das textile Flächengebilde 4 ist hier und vorzugsweise ein Gestrick und/oder ein Gewirk und/oder ein Gewebe. Durch das Gestrick und/oder Gewirk und/oder Gewebe und deren Struktur wird im Ausführungsbeispiel die Mikrostruktur gebildet. Hier und vorzugsweise wird die Mikrostruktur durch die Maschen des Gestrick und/oder Gewirk und/oder Gewebe gebildet. Auch die Mikrostruktur stellt ein Strömungshindernis dar und bricht eine Schwappbewegung auf die Schwappschutzvorrichtung 1, wodurch diese gedämpft wird. Hier und vorzugsweise beträgt die Maschenweite 10, insbesondere im unbelasteten Zustand des textilen Flächengebildes, zwischen 0,5 cm und 2,5 cm vorzugsweise zwischen 0,8 cm und 1,5 cm. In den Ausführungsbeispielen und vorzugsweise ist das Schwappschutzelement 5 einstückig ausgebildet.

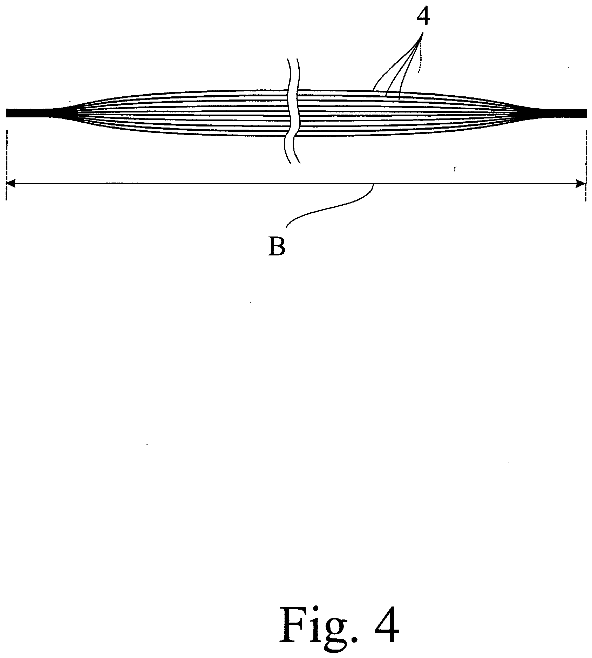

Das Schwappschutzelement 5 im entfalteten, noch nicht am Befestigungselement 6 befestigten Zustand ist in der Fig. 4 gezeigt. Es besteht hier und vorzugsweise aus mehreren Schichten. Die mehreren Schichten können durch aufeinanderlegen, insbesondere durch Umschlagen und/oder aufeinanderlegen mehrerer, insbesondere getrennter Flächengebilde 4 gebildet werden. Diese mehreren Schichten sind hier und vorzugsweise zu einem Schwappschutzelement 5 verbunden, vorzugsweise an den Enden. Die Verbindung kann bspw. durch schweißen, nähen, kleben o. dgl. erfolgen. Es ergibt sich vorzugsweise ein einstückiges Schwappschutzelement 5.

Das Schwappschutzelement 5 kann elastisch ausgebildet sein. Hier und vorzugsweise ist das Schwappschutzelement 5, insbesondere zumindest aber seine Oberfläche, aus einem kraftstoffbeständigen Material hergestellt. Das Material ist vorzugsweise ein Kunststoff, insbesondere Polyethylen. Das Schwappschutzelement 5 kann thermisch vorbehandelt sein, insbesondere einem thermischen Schrumpfungsprozess unterzogen sein. Das Falten bzw. Biegen des Flächengebildes 4 in die Form des Schwappschutzelements 5 kann wärmeunterstützt erfolgen.

Zusätzlich oder alternativ kann durch eine Wärmebehandlung die Steifigkeit des Schwappschutzelements 5 gezielt eingestellt werden, bspw. indem es lediglich in bestimmten Bereichen erwärmt wird. Auf diese Art und Weise lassen sich beispielsweise, insbesondere zur Einstellung der Dämpfungseigenschaften, abschnittsweise formsteife Strukturen im Flächengebilde 4 ausbilden.

Das Befestigungselement 6 ist hier und vorzugsweise aus einem kraftstoffbeständigen Material gebildet. Hier ist es aus einem kraftstoffbeständigen Kunststoff, insbesondere im Spritzgussverfahren hergestellt.

Das Schwappschutzelement 5 ist vorzugsweise direkt am Befestigungselement 6 befestigt. Alternativ ist es jedoch auch denkbar, dass das Befestigungselement 6 eine Hülle hält, in welcher das Schwappschutzelement 5 aufgenommen ist. Vorzugsweise ist die Schwappschutzvorrichtung 1 aber hüllenfrei ausgebildet.

Vorzugsweise weist das Befestigungselement 6 mindestens einen Dorn 11, insbesondere mindestens zwei Dorne 11 auf (vgl. Fig. 3b), auf welchen bzw. auf welche das Schwappschutzelement 5 durch aufstecken befestigt ist. Hier weist das Befestigungselement 6 mit seinen beiden Dornen 11 und dem Verbindungsabschnitt 12 vorzugsweise im Wesentlichen eine U-Form auf.

In den Ausführungsbeispielen der Fig. 2 und 3a weist das Befestigungselement 6 vier Dorne 11 auf. Die Dorne 11 sind vorzugsweise über einen Verbindungsabschnitt 12 miteinander verbunden. Hier weist das Befestigungselement 6 vorzugsweise mit seinen vier Dornen 11 und dem Verbindungsabschnitt 12 im Wesentlichen eine H-Form auf.

Ein Schwappschutzelement 5 erstreckt sich vorzugsweise, wie in den Fig. 2a und 3a gezeigt, zumindest teilweise auf zwei Seiten der Längsachse des Verbindungsabschnitts 12.

Die Dorne 11 können teilweise in unterschiedliche, insbesondere entgegengesetzte Richtungen weisen, wie in den Fig. 2a) und 3a) gezeigt. Vorzugsweise erstrecken sich die Dorne 11 parallel zu der Vorzugsrichtung 9.

Zum Halten des Schwappschutzelements 5 weisen die Dorne 11, insbesondere an deren Enden, Widerhaken 13 auf. In den Ausführungsbeispielen ist am Ende eines jeden Dorns 11 ein Widerhaken 13 angeordnet. In alternativen Ausführungsbeispielen können jedoch auch mehrere Widerhaken 13 an einem Dorn 11 angeordnet sein. Diese können beispielsweise sich in der Art einer tannenbaumförmigen Struktur entlang des Dorns 11 erstrecken.

Ferner weist das Befestigungselement 6 einen Befestigungsabschnitt 14 zur Befestigung der Schwappschutzvorrichtung 1 im Inneren eines Tanks 3 auf. Der Befestigungsabschnitt 14 ist hier am Verbindungsabschnitt 12 angeordnet. Vorzugsweise ist der Befestigungsabschnitt 14 als Clip- und/oder Klemm- und/oder Rastkontur ausgebildet. Auf diese Art und Weise kann eine einfache form- und/oder kraftschlüssige Befestigung, insbesondere Schnappbefestigung, der Schwappschutzvorrichtung 1 im Tank 3 realisiert werden.

Ein Schwappschutzelement 5 kann an in unterschiedliche Richtungen, insbesondere entgegengesetzten Richtungen, weisenden Dornen 11 gehalten sein, hier und vorzugsweise wird es durch Aufstecken gehalten. Insbesondere können die beiden Enden eines ein Schwappschutzelement 5 bildenden Textilgebildes 4 an in unterschiedliche Richtungen weisenden Dornen 11 gehalten sein, vgl. Fig. 2. Vorzugsweise sind die die beiden Enden des ein Schwappschutzelement bildenden Textilgebildes 4 an in dieselbe Richtung weisenden Dornen 11 gehalten, vgl. Fig. 3. Dies ermöglicht ein sicheres Halten des Schwappschutzelements 5 am Befestigungselement 6.

Vorzugsweise weist die Schwappschutzvorrichtung 1 genau ein Schwappschutzelement 5 auf, vgl. Fig. 3. Wie zuvor beschrieben kann die Schwappschutzvorrichtung 1 jedoch auch mehrere Schwappschutzelemente 5 aufweisen. Diese können schichtweise getrennt voneinander auf den Dornen 11 angeordnet sein, oder aber, wie in der Fig. 2 gezeigt, zumindest zum Teil gemeinsam gefaltet auf den Dornen 11 angeordnet sein.

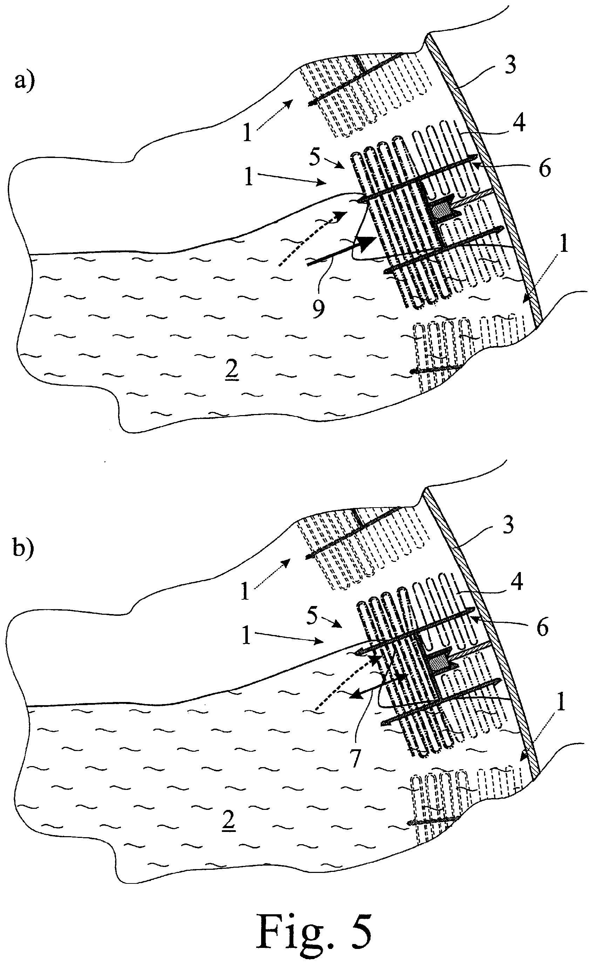

In der Fig. 5 ist eine Schwappschutzvorrichtung 1 zur Dämpfung von Schwappbewegungen eines flüssigen Mediums 2 in dem Tank gezeigt. Sie ist auf einem Tankbefestigungselement 15 im Tank 3 aufgesteckt. Das Tankbefestigungselement 15 ist vorzugsweise an einer Tankinnenwand angeordnet. Es ist zum Befestigen der Schwappschutzvorrichtung 5 korrespondierend zum Befestigungsabschnitt 14 der Schwappschutzvorrichtung 1 ausgebildet. Vorzugsweise ist die Schwappschutzvorrichtung 1 lösbar im Tank 3 befestigt. Bei der Herstellung des Tanks 3 wird vorzugsweise zunächst die Schwappschutzvorrichtung 1 hergestellt und danach in den Tank eingebracht und dort befestigt.

In dem Tank 3 können mehrere Schwappschutzvorrichtungen 1 angeordnet sein. Vorzugsweise erstrecken sich die Schwappschutzvorrichtungen 1 entlang der von den Schwappbewegungen beaufschlagten Tankinnenflächen. Sie können sich seitlich nebeneinander und/oder übereinander angeordnet sein, vgl. Fig. 5.

Zusätzlich oder alternativ können sie als Strömungsbarrieren in Verbindungsabschnitten zwischen Tankbereichen angeordnet sein. Vorzugsweise bleiben jedoch mindestens 50 % weiter vorzugsweise mindestens 80 % des Tankinnenraums schwappschutzvorrichtungsfrei, wobei hier und vorzugsweise von den Schwappschutzvorrichtungen 1 bzw. der Schwappschutzvorrichtung 1 eingenommene Volumen dem Hüllvolumen H um die Schwappschutzvorrichtung 1 entspricht, vgl. Fig. 1.

Vorzugsweise sind die Schwappschutzvorrichtungen 1 derart im Tank angeordnet, dass eine Schwappbewegung, wie dies beispielsweise in der Fig. 5 gezeigt ist, sich im Wesentlichen in Richtung der Vorzugsrichtung 9 auf die Schwappschutzvorrichtung 1 einwirkt. Die Schwappschutzvorrichtung 1, vorzugsweise das Schwappschutzelement 5, weiter vorzugsweise die Makrostruktur, erlaubt wie in der Fig. 5b gezeigt ein Einfedern 7 entlang der Vorzugsrichtung 9. Die Schwappschutzvorrichtung 1 kann gemäß eines weniger bevorzugten Ausführungsbeispiels jedoch auch in einer anderen Ausrichtung im Tank 3 angeordnet sein.

Die Schwappbewegung wird hier durch zwei Mechanismen gedämpft, insbesondere gebremst bzw. gebrochen, wie das auch in der Fig. 5 zu sehen ist.

Die Dämpfung erfolgt zumindest zum Teil dadurch, dass eine Schwappbewegung durch das textile Flächengebilde 4, insbesondere die durch das textile Flächengebilde 4 bestimmte Mikrostruktur, strömen muss und dieses einen Strömungswiderstand für die Schwappbewegung darstellt. Die Schwappbewegung wird dabei in vielfacher Weise gebrochen. Die geordnete Formstruktur bzw. die Makrostruktur bewirkt hier und vorzugsweise eine zusätzliche Dämpfungswirkung, insbesondere durch das zuvor schon beschriebene Einfedern. Durch das Einfedern wird das Schwappschutzelement 5 zusammengedrückt, wodurch vorzugsweise der Strömungswiderstand des textilen Flächengebildes 4, insbesondere der Mikrostruktur, weiter erhöht wird. Die Erhöhung wird hier und vorzugsweise dadurch erreicht, dass die Lagen bzw. Schichten des textilen Flächengebildes zusammengedrückt werden und sich insbesondere zwischen diesen und ihren Maschen kleinere Durchströmungsöffnungen ergeben.

## Patentansprüche

1. Schwappschutzvorrichtung zur Dämpfung von Schwappbewegungen eines flüssigen Mediums (2) in einem Tank (3) mit einem durch ein textiles Flächengebilde (4) gebildetes, zumindest teilweise fluiddurchlässigen Schwappschutzelement (5) zur Dämpfung von Schwappbewegungen und mit einem Befestigungselement (6) zur Befestigung des Schwappschutzelements (5) in dem Tank (3), wobei das Schwappschutzelement (5) eine durch die Struktur des textilen Flächengebildes (4) bestimmte Mikrostruktur zur Dämpfung der Schwappbewegungen aufweist,
**dadurch gekennzeichnet, dass** das Schwappschutzelement (5) eine durch eine Anordnung, insbesondere Formgebung, des textilen Flächengebildes (4) erzeugte Makrostruktur zur Dämpfung der Schwappbewegungen aufweist.

2. Schwappschutzvorrichtung nach Anspruch 1, **dadurch gekennzeichnet, dass** das Schwappschutzelement (5) eine räumlich geordnete Formstruktur aufweist, welche durch die Makrostruktur gebildet wird.

3. Schwappschutzvorrichtung nach Anspruch 1 oder 2, **dadurch gekennzeichnet, dass** das Schwappschutzelement (5) zumindest teilweise elastisch ausgebildet ist.

4. Schwappschutzvorrichtung nach einem der vorhergehenden Ansprüche,
**dadurch gekennzeichnet, dass** das Befestigungselement (6) das Schwappschutzelement (5) in der Makrostruktur und/oder in der geordneten Formstruktur hält.

5. Schwappschutzvorrichtung nach einem der vorhergehenden Ansprüche,
**dadurch gekennzeichnet, dass** die Makrostruktur und/oder die Formstruktur durch eine Faltung (8) des textilen Flächengebilde (4) gebildet wird, vorzugsweise, dass das textile Flächengewebe (4) ziehharmonikaartig gefaltet ist.

6. Schwappschutzvorrichtung nach einem der vorhergehenden Ansprüche,
**dadurch gekennzeichnet, dass** die Makrostruktur und/oder die geordnete Formstruktur die Dämpfungswirkung in einer Vorzugsrichtung (9) bereitstellt.

7. Schwappschutzvorrichtung nach einem der vorhergehenden Ansprüche,
**dadurch gekennzeichnet, dass** die Dämpfungswirkung der Makrostruktur und/oder die Dämpfungswirkung der Formstruktur durch das Flächengebilde (4) selbst bereitgestellt wird.

8. Schwappschutzvorrichtung nach einem der vorhergehenden Ansprüche,
**dadurch gekennzeichnet, dass** das textiles Flächengebilde (4) ein Gestrick und/oder Gewirk und/oder Gewebe ist, insbesondere ein Gestrickschlauch und/oder ein Gewirkschlauch und/oder Gewebeschlauch ist.

9. Schwappschutzvorrichtung nach einem der vorhergehenden Ansprüche,
**dadurch gekennzeichnet, dass** das Schwappschutzelement (5) aus einem Kunststoff, vorzugsweise kraftstoffbeständigen Kunststoff, weiter vorzugsweise Polyethylen, aufweist, insbesondere besteht.

10. Schwappschutzvorrichtung nach einem der vorhergehenden Ansprüche,
**dadurch gekennzeichnet, dass** das Befestigungselement (6) mindestens einen Dorn (11), insbesondere mindestens zwei Dorne (11), zum Aufstecken des Schwappschutzelements (5) aufweist, vorzugsweise, dass die Dorne (11) sich parallel erstrecken.

11. Schwappschutzvorrichtung nach einem der vorhergehenden Ansprüche,
**dadurch gekennzeichnet, dass** das Befestigungselement (6) einen Befestigungsabschnitt (15) zur Befestigung der Schwappschutzvorrichtung (1) im inneren eines Tanks (3) aufweist.

12. Tank mit einer Schwappschutzvorrichtung zur Dämpfung von Schwappbewegungen eines flüssigen Mediums (2) in einem Tank (3),
**dadurch gekennzeichnet, dass** die Schwappschutzvorrichtung (1) nach einem der vorhergehenden Ansprüche ausgebildet ist.

13. Tank nach Anspruch 12, **dadurch gekennzeichnet, dass** der Tank (3) ein zu dem Befestigungselement (6) der Schwappschutzvorrichtung (1) korrespondierendes Tankbefestigungselement (15) zur Befestigung der Schwappschutzvorrichtung (1) in dem Tank (3) aufweist.

## Claims

1. A slop prevention apparatus for damping slopping movements of a liquid medium (2) in a tank (3), having a slop prevention element (5) for damping slopping movements which is formed by a textile area-measured material (4) and which is at least partly fluid-permeable, and having a fastening element (6) for fastening the slop prevention element (5) in the tank (3), wherein the slop prevention element (5) has a microstructure for damping the slopping movements which is determined by the structure of the textile area-measured material (4),
**characterized in that** the slop prevention element (5) has a macrostructure for damping the slopping movements which is produced by an arrangement, in particular by a shape, of the textile area-measured material (4).

2. A slop prevention apparatus in accordance with claim 1, **characterized in that** the slop prevention element (5) has a spatially ordered shape structure which is formed by the macrostructure.

3. A slop prevention apparatus in accordance with claim 1 or claim 2, **characterized in that** the slop prevention element (5) is formed at least partly as elastic.

4. A slop prevention apparatus in accordance with any one of the preceding claims, **characterized in that** the fastening element (6) holds the slop prevention element (5) in the macrostructure and/or in the ordered shape structure.

5. A slop prevention apparatus in accordance with any one of the preceding claims, **characterized in that** the macrostructure and/or the shape structure is/are formed by a fold (8) of the textile area-measured material (4), preferably **in that** the textile area-measured material (4) is folded like a concertina.

6. A slop prevention apparatus in accordance with any one of the preceding claims, **characterized in that** the macrostructure and/or the ordered shape structure provides/provide the damping effect in a preferred direction (9).

7. A slop prevention apparatus in accordance with any one of the preceding claims, **characterized in that** the damping effect of the macrostructure and/or the damping effect of the shape structure is/are provided by the area-measured material (4) itself.

8. A slop prevention apparatus in accordance with any one of the preceding claims, **characterized in that** the textile area-measured material (4) is a knitted fabric and/or a meshed fabric and/or a woven fabric, in particular a knitted hose and/or a meshed hose and/or a woven fabric hose.

9. A slop prevention apparatus in accordance with any one of the preceding claims, **characterized in that** the slop prevention element (5) has, in particular comprises, a plastic, preferably a fuel-resistant plastic, further preferably polyethylene.

10. A slop prevention apparatus in accordance with any one of the preceding claims, **characterized in that** the fastening element (6) has at least one mandrel (11), in particular at least two mandrels (11), for plugging on the slop prevention element (5), preferably **in that** the mandrels (11) extend in parallel.

11. A slop prevention apparatus in accordance with any one of the preceding claims, **characterized in that** the fastening element (6) has a fastening section (15) for fastening the slop prevention apparatus (1) in the interior of a tank (3).

12. A tank having a slop prevention apparatus for damping slopping movements of a liquid medium (2) in a tank (3),
**characterized in that** the slop prevention apparatus (1) is configured in accordance with any one of the preceding claims.

13. A tank in accordance with claim 12, **characterized in that** the tank (3) has a tank fastening element (15) corresponding to the fastening element (6) of the slop prevention apparatus (1) for fastening the slop prevention apparatus (1) in the tank (3).

## Revendications

1. Dispositif de protection anti-ballottement pour amortir des mouvements de ballottement d'un milieu liquide (2) dans un réservoir (3), comportant un élément de protection anti-ballottement (5) pour amortir des mouvements de ballottement, qui est formé par une formation textile surfacique (4) et qui est au moins partiellement perméable aux fluides, et comportant un élément de fixation (6) pour fixer l'élément de protection anti-ballottement (5) dans le réservoir (3), l'élément de protection anti-ballottement (5) présentant une microstructure pour amortir les mouvements de ballottement, qui est déterminée par la structure de la formation textile surfacique (4),
**caractérisé en ce que**
l'élément de protection anti-ballottement (5) présente une macrostructure pour amortir les mouvements de ballottement, qui est générée par un agencement, en particulier par une mise en forme de la formation textile surfacique (4).

2. Dispositif de protection anti-ballottement selon la revendication 1,
**caractérisé en ce que** l'élément de protection anti-ballottement (5) présente une structure de forme ordonnée dans l'espace qui est constituée par la macrostructure.

3. Dispositif de protection anti-ballottement selon la revendication 1 ou 2,
**caractérisé en ce que**
l'élément de protection anti-ballottement (5) est réalisé au moins partiellement élastique.

4. Dispositif de protection anti-ballottement selon l'une des revendications précédentes,
**caractérisé en ce que**
l'élément de fixation (6) maintient l'élément de protection anti-ballottement (5) dans la macrostructure et/ou dans la structure de forme ordonnée.

5. Dispositif de protection anti-ballottement selon l'une des revendications précédentes,
**caractérisé en ce que**
la macrostructure et/ou la structure de forme est pliée par un pliage (8) de la formation textile surfacique (4), de préférence **en ce que** la formation textile surfacique (4) est pliée en accordéon.

6. Dispositif de protection anti-ballottement selon l'une des revendications précédentes,
**caractérisé en ce que**
la macrostructure et/ou la structure de forme ordonnée assure l'effet d'amortissement dans une direction préférentielle (9).

7. Dispositif de protection anti-ballottement selon l'une des revendications précédentes,
**caractérisé en ce que**
l'effet d'amortissement de la macrostructure et/ou l'effet d'amortissement de la structure de forme est assuré par la formation surfacique (4) elle-même.

8. Dispositif de protection anti-ballottement selon l'une des revendications précédentes,
**caractérisé en ce que**
la formation textile surfacique (4) est un tricot et/ou un maillage et/ou un tissu, en particulier une gaine tricotée et/ou une gaine maillée et/ou une gaine tissée.

9. Dispositif de protection anti-ballottement selon l'une des revendications précédentes,
**caractérisé en ce que**
l'élément de protection anti-ballottement (5) comprend, est en particulier constitué d'une matière plastique, de préférence d'une matière résistante aux carburants, de préférence particulière de polyéthylène.

10. Dispositif de protection anti-ballottement selon l'une des revendications précédentes,
**caractérisé en ce que**
l'élément de fixation (6) comprend au moins un mandrin (11), en particulier au moins deux mandrins (11), pour enficher l'élément de protection anti-ballottement (5), de préférence **en ce que** les mandrins (11) s'étendent parallèlement.

11. Dispositif de protection anti-ballottement selon l'une des revendications précédentes,
**caractérisé en ce que**
l'élément de fixation (6) comprend une portion de fixation (15) pour fixer le dispositif de protection anti-ballottement (1) à l'intérieur d'un réservoir (3).

12. Réservoir comportant un dispositif de protection anti-ballottement pour amortir des mouvements de ballottement d'un milieu liquide (2) dans un réservoir (3),
**caractérisé en ce que**
le dispositif de protection anti-ballottement (1) est réalisé selon l'une des revendications précédentes.

13. Réservoir selon la revendication 12,
**caractérisé en ce que**
le réservoir (3) comprend un élément de fixation de réservoir (15) pour fixer le dispositif de protection anti-ballottement (1) dans le réservoir (3), élément qui correspond à l'élément de fixation (6) du dispositif de protection anti-ballottement (1).
